# EUROPÄISCHE PATENTSCHRIFT

(11) **EP 3 853 168 B1**
(45) Veröffentlichungstag und Bekanntmachung des Hinweises auf die Patenterteilung: **12.10.2022**
(21) Anmeldenummer: 19727390.7
(22) Anmeldetag: 28.05.2019
(51) Int. Cl.: B67C 3/00, B67C 3/02

(54) **GETRÄNKEVERARBEITUNGSANLAGE UND -VERFAHREN ZUM ABFÜLLEN EINES GETRÄNKS IN BEHÄLTER**
DRINKS PROCESSING SYSTEM AND METHOD FOR FILLING A DRINK INTO CONTAINERS
INSTALLATION ET PROCÉDÉ DE TRAITEMENT DE BOISSONS POUR LE REMPLISSAGE D'UNE BOISSON DANS DES CONTENEURS

(30) Priorität: 21.09.2018 DE 102018216138
(43) Veröffentlichungstag der Anmeldung: 28.07.2021
(73) Patentinhaber: Krones AG, 93073 Neutraubling (DE)
(72) Erfinder: WINTER, Ute, 93073 Neutraubling (DE); ENGELHARD, Patrick, 93073 Neutraubling (DE); BECHER, Valentin, 93073 Neutraubling (DE); BEIERLE, Eva, 93073 Neutraubling (DE)
(74) Vertreter: Grünecker Patent- und Rechtsanwälte PartG mbB
(86) Internationale Anmeldenummer: PCT/EP2019/063864
(87) Internationale Veröffentlichungsnummer: WO 2020/057784

(56) Entgegenhaltungen:
- EP-A1- 2 272 791
- EP-A1- 2 314 538
- DE-A1-102017 211 653

## Beschreibung

Die Erfindung betrifft eine Getränkeverarbeitungsanlage und -verfahren zum Abfüllen eines Getränks in Behälter mit den Merkmalen des Oberbegriffs von Anspruch 1 bzw. 12.

Üblicherweise wird in Getränkeverarbeitungsanlagen ein Fertigsirup mit Wasser auf einen Brixgehalt zu dem fertigen Getränk verdünnt und durch Zugabe von Kohlensäure auf den sortenspezifischen Kohlensäuregehalt karbonisiert. Dies geschieht üblicherweise vor dem Füller, mit dem dann das fertig gemischte und karbonisierte Getränk in die Behälter abgefüllt wird.

Der Füller umfasst beispielsweise ein Karussell mit Behälteraufnahmen, denen jeweils ein Füllventil zugeordnet ist, um das fertig gemischte und karbonisierte Getränk während des Transports in die Behälter abzufüllen. Anschließend werden die mit dem Getränk befüllten Behälter zu einem Verschließer transportiert und jeweils ein Verschluss aufgebracht.

Um ein flexibleres Abfüllen des Getränks zu ermöglichen, sind Füller bekannt, bei denen wenigstens zwei Komponenten des Getränks mit den Füllventilen abgefüllt werden. Dazu umfasst der Füller mehrere Füllventile zum Abfüllen des Getränks in die Behälter, wobei die Füllventile jeweils mit einer Abfülleinrichtung zum Abfüllen des Getränks aus den wenigstens zwei Komponenten in einen der Behälter ausgebildet sind.

Beispielsweise können die Füllventile auch jeweils eine Mischeinrichtung mit einem in das jeweilige Füllventil integrierten Füllkörper umfassen, in den ein Hauptstrom mit flüssigem Produkt und ein Dosierstrom mit Fertigsirup münden. Durch den Dosierstrom wird das flüssige Produkt im Füllkörper verdrängt, wobei die Menge des zu dosierten Dosierstrom mittels eines Durchflussmessers der Mischeinrichtung erfasst wird.

Nachteilig dabei ist, dass das endgültige Getränk erst in den Behältern vorliegt und daher beim Abfüllen selbst keine zuverlässige und zufriedenstellende Qualitätssicherung möglich ist. Es ist lediglich bekannt, die Behälter stichprobenartig zu testen, wobei die Erkennung eines fehlerhaften Getränks nur mit einer Zeitverzögerung möglich ist und daher bis zur Korrektur größere Mengen des fehlerhaften Getränks produziert und abgefüllt werden.

Die EP 2 272 791 A1 offenbart eine Getränkeverarbeitungsanlage und ein Verfahren gemäß den Oberbegriffen der Ansprüche 1 und 12.

Die EP 2 314 538 A1 offenbart eine Vorrichtung und ein Verfahren zum verlustfreien Abfüllen von kontinuierlich gemischten Medien in Behältnissen.

Aufgabe der vorliegenden Erfindung ist es daher, für eine Getränkeverarbeitungsanlage, bei der die Füllventile des Füllers jeweils mit einer Abfülleinrichtung für wenigstens zwei Komponenten ausgebildet sind, eine zuverlässige und schnelle Qualitätssicherung des in die Behälter abgefüllten Getränks bereitzustellen.

Zur Lösung dieser Aufgabenstellung stellt die Erfindung eine Getränkeverarbeitungsanlage mit den Merkmalen des Anspruchs 1 bereit. Vorteilhafte Ausführungsformen der Erfindung sind in den Unteransprüchen genannt.

Dadurch, dass die Getränkeverarbeitungsanlage die Gasanalyseeinrichtung zur Qualitätssicherung des in die Behälter abgefüllten Getränks umfasst, wobei die wenigstens eine Gasanalyseeinrichtung jeweils eine Gasansaugeinrichtung zum Ansaugen von Gas aus dem Kopfbereich der mit dem Getränk befüllten Behälter und einen Analysator zur Analyse des angesaugten Gases umfasst, ist es möglich, das aus dem Kopfbereich der Behälter angesaugte Gas hinsichtlich seiner Zusammensetzung zu analysieren. Der Erfinder hat in umfangreichen Untersuchungen festgestellt, dass es möglich ist, aus der analysierten Zusammensetzung des angesaugten Gases auf die Qualität des in den jeweiligen Behälter abgefüllten Getränks zu schließen. Folglich ist es also möglich, mittels der Gasanalyseeinrichtung eine zuverlässige und schnelle Qualitätssicherung des in die Behälter abgefüllten Getränks durchzuführen.

Die Getränkeverarbeitungsanlage kann weitere Behälterbehandlungsmaschinen umfassen, insbesondere eine Behälterherstellungsmaschine, einen Rinser, eine Behälterinspektionsmaschine, eine Etikettiermaschine, eine Direktdruckmaschine, eine Verpackungsmaschine und/oder eine Gebindekontrollmaschine.

Mit dem Getränk kann insbesondere ein Softdrink, aromatisiertes Wasser oder ein Getränk auf Teebasis gemeint sein. Denkbar sind jedoch auch Bier-Mischgetränke oder alle Getränke, die aus einem Hauptprodukt und flüssigen Zusatzkomponenten mit einem Mischungsverhältnis von 1:20 bis 1:2 bestehen. Die Behälter können dazu vorgesehen sein, das Getränk vom Hersteller zum Endverbraucher zu transportieren.

Die Behälter können Kunststoffflaschen, Glasflaschen, Dosen und/oder Tuben sein. Bei Kunststoffflaschen kann es sich im speziellen um PET-, PEN-, HD-PE- oder PP-Flaschen handeln. Ebenso kann es sich um biologisch abbaubare Getränkeflaschen handeln, deren Hauptbestandteile aus nachwachsenden Rohstoffen wie zum Beispiel Zuckerrohr, Weizen oder Mais bestehen.

Der Füller kann ein Karussell mit daran angeordneten Füllstationen umfassen, wobei jeder Füllstation eines der Füllventile zugeordnet ist. Die Füllstationen können jeweils mit Behälteraufnahmen zur Aufnahme und zum Transport der Behälter während des Abfüllens ausgebildet sein. Die Denkbar ist, dass die Füllventile jeweils mit einer Mischeinrichtung zum Mischen des Getränks aus den wenigstens zwei Komponenten ausgebildet sind. Mischeinrichtung kann beispielsweise einen Füllkörper des jeweiligen Füllventils umfassen. Vorzugsweise kann die Mischeinrichtung eine Kammer umfassen, die zum Mischen der wenigstens zwei Komponenten ausgebildet ist. Beispielsweise kann die Kammer wenigstens zwei Einläufe für die wenigstens zwei Komponenten und einen Auslauf für das gemischte, abzufüllenden Getränk umfassen. Bei einer der wenigstens zwei Komponenten kann es sich um ein Hauptstrom mit Produkt handeln, beispielsweise um ein teilweise vorgemischtes Getränk oder um Wasser. Das Wasser kann nicht karbonisiert oder karbonisiert sein. Denkbar ist jedoch auch, dass es sich bei dem Hauptstrom um einen Grundbestandteil des Produkts handelt, wie Tee, Bier oder dergleichen. Bei einer anderen der wenigstens zwei Komponenten kann es sich um einen Zustrom mit Fertigsirup handeln.

Alternativ ist auch denkbar, dass die wenigstens zwei Komponenten hintereinander oder gleichzeitig ungemischt in die Behälter abgefüllt werden und sich erst dort vermischen.

Der Verschließer kann ein Karussell mit daran angeordneten Behälteraufnahmen und jeweils zugeordneten Verschließköpfen umfassen. Insbesondere kann der Verschließer dazu ausgebildet sein, die Behälter mit Verschlüssen zu verschließen, beispielsweise Kronkorken, Schraubverschlüsse, Korken oder dergleichen.

Der Transporteur kann als Karussell oder als Lineartransporteur ausgebildet sein. Denkbar ist, dass es sich bei dem Transporteur um das Karussell des Füllers oder um das Karussell des Verschließers handelt. Ebenso ist denkbar, dass es sich um einen vom Füller und Verschließer separaten Transporteur handelt.

Die Getränkeverarbeitungsanlage kann eine Steuerungseinrichtung umfassen, um den Füller, den Verschließer und/oder den Transporteur zu steuern. Die Steuerungseinrichtung kann einen Mikrocontroller, einen Speicher, eine Netzwerkschnittstelle, Schnittstellen zum Füller, zum Verschließer und/oder zum Transporteur, eine Anzeigeeinrichtung wie beispielsweise einen Bildschirm, eine Eingabeeinrichtungen wie beispielsweise eine Tastatur und dergleichen umfassen.

Der Analysator kann einen Gaschromatographen, ein lonenmobilitätsspektrometer (IMS) und/oder ein Massenspektrometer umfassen. Der Gaschromatograph kann aus einer temperierten oder nicht temperierten Kapillar- oder Multikapillarsäule mit unterschiedlicher Beschichtung zur Auftrennung der Substanzen und beispielsweise Stickstoff als Trägergas bestehen. Denkbar ist auch ein Temperaturprofil zur Trennung der Bestandteile des angesaugten Gases. Das Massenspektrometer kann aus einer Ionisierungs-Quelle zur Erzeugung von ionisierten Teilchen, Elektroden zur Auftrennung der ionisierten Teilchen im elektrischen Feld nach ihrer Ladung oder Masse und/oder einen Detektor zur Erfassung der aufgetrennten, ionisierten Teilchen umfassen. Außerdem ist denkbar, ein lonenmobilitätsspektrometer einzeln oder mit einem Gaschromatographen gekoppelt als Analysator einzusetzen. Ein lonenmobilitätsspektrometer kann beispielsweise eine Ionisierungsquelle, ein elektrisches Feld mit einem inerten Gas zum Auftrennen der Moleküle nach Masse und Größe, beispielsweise Stickstoff, und/oder einen Detektor umfassen. Dadurch kann die Zusammensetzung des angesaugten Gases aus dem Kopfbereich besonders zuverlässig und schnell bestimmt werden.

Die Gasanalyseeinrichtung kann eine Düse zum Einblasen eines Verdrängungsgases in den Kopfbereich der mit dem Getränk befüllten Behälter umfassen, um durch das Verdrängungsgas einen im Kopfbereich vorhandenen, gasförmigen Anteil des Getränks zur Gasansaugeinrichtung hin zu verdrängen. Dadurch kann eine besonders große Menge des Gases aus den Kopfbereich angesaugt werden, wodurch die Analyse des angesaugten Gases noch zuverlässiger arbeitet. Beispielsweise kann es sich bei der Düse um ein Rohrende handeln, das beim Ansaugen auf einen Mündungsbereich eines mit dem Getränk befüllten Behälters gerichtet ist. Insbesondere kann die Gasanalyseeinrichtung einen Vorrat und/oder eine Pumpe für das Verdrängungsgas umfassen. Beispielsweise kann es sich bei der Verdrängungsgas um vorzugsweise gereinigte Luft oder Stickstoff handeln.

Die Düse und die Gasansaugeinrichtung können in einer Förderrichtung hintereinander angeordnet sein. Dadurch kann mit der Düse das Verdrängungsgas bereits in den Kopfbereich eingeblasen werden, wenn der Behälter für die nachfolgende Gasansaugeinrichtung noch nicht ganz in Position ist. Dadurch wird die Umgebungsluft zwischen dem Kopfbereich und der Gasansaugeinrichtung verdrängt, bevor das Gas aus dem Kopfbereich angesaugt wird. Folglich wird beim Ansaugen weniger Umgebungsluft angesaugt und die Analyse des Gases aus dem Kopfbereich ist noch genauer. Vorzugsweise kann die Düse entgegen der Förderrichtung vor der Gasansaugeinrichtung angeordnet sein. Mit "Förderrichtung" kann hier die Förderrichtung eines Behälterstroms der Behälter durch die Getränkeverarbeitungsanlage gemeint sein. Insbesondere kann die Förderrichtung des Transporteurs oder des Füllers gemeint sein.

Die Gasansaugeinrichtung kann ein Gasansaugrohr umfassen, das insbesondere über eine Schlauch- oder Rohrverbindung mit dem Analysator verbunden ist. Dadurch kann die Gasansaugeinrichtung besonders einfach aufgebaut werden.

Die Gasanalyseeinrichtung kann zwischen dem Füller und dem Verschließer am Transporteur angeordnet sein. Dadurch sind der Aufwand und die Kosten für den Analysator besonders gering. Denkbar ist, dass die Gasanalyseeinrichtung und/oder die Steuerungseinrichtung dazu ausgebildet sind, die Analyse des angesaugten Gases eines bestimmten Behälters einem bestimmten Füllventil zuzuordnen. Beispielsweise kann über eine Länge eines Transportwegs vom Füller zur Gasanalyseeinrichtung und über eine Transportgeschwindigkeit der Behälter bestimmbar sein, von welchem der Füllventile der bestimmte Behälter befüllt wurde.

Denkbar ist auch, dass die Gasanalyseeinrichtung in der Füllmaschine angeordnet ist.

Beispielsweise können mehrere Gasanalyseeinrichtungen vorhanden sein, die jeweils einem der Füllventile zugeordnet sind. Dadurch vermischt sich besonders wenig Umgebungsluft mit dem Gas aus dem Kopfbereich und die Analyse ist folglich noch genauer.

Die Füllventile können jeweils ein Rückgasrohr umfassen, das wenigstens ein Teil der Gasansaugeinrichtung bildet. Dadurch kann das beim Abfüllen durch das Rückgasrohr verdrängte Gas in den Behältern besonders einfach zur Analyse herangezogen werden.

Weiterhin bevorzugt kann im Füller ein Drehverteiler angeordnete sein, um das verdrängte bzw. angesaugte Gas über den Drehverteiler zum Analysegerät zu führen, so dass viele Füllstationen auf ein- oder mehrere Analysegeräte zusammengeführt werden können. Zum Schutz vor unbeabsichtigten Flüssigkeitseintrag kann der Analysator in der Gasansaugeinrichtung, insbesondere in einem Ansaugkanal, eine oder mehrere Filter wie z.B. Siebe oder Wasserfallen umfassen.

Die wenigstens eine Gasanalyseeinrichtung kann weiter jeweils eine Auswerteeinheit umfassen, um die Analyse des angesaugten Gases auszuwerten. Dadurch kann die Auswertung besonders schnell durchgeführt werden, wodurch weniger Ausschuss eines fehlerhaften Getränks entsteht. Beispielsweise kann die Auswerteeinheit einen Mikrocontroller, einen Speicher, eine Netzwerkschnittstelle, eine Schnittstelle zum Analysator, eine Schnittstelle zur Steuerungseinrichtung, eine Anzeigeeinrichtung wie beispielsweise einen Bildschirm, eine Eingabeeinrichtungen wie beispielsweise eine Tastatur und dergleichen umfassen. Denkbar ist auch, dass die Auswerteeinheit in die Steuerungseinrichtung der Getränkeverarbeitungsanlage integriert ist.

Die Auswerteeinheit kann dazu ausgebildet sein, um von der Analyse des angesaugten Gases auf Mischverhältnisse des abgefüllten Getränks zu schließen. Beispielsweise können in der Auswerteeinheit dazu Kurvenfunktionen, Messkurven und/oder Formeln hinterlegt sein, mit der aus einer Konzentration eines Stoffes im angesaugten Gas eine entsprechende Konzentration des Stoffes im abgefüllten Getränk bestimmt werden kann. Bei dem Stoff kann es sich um eine chemische Verbindung und/oder um ein chemisches Element handeln.

Darüber hinaus stellt die Erfindung zur Lösung der Aufgabenstellung ein Getränkeverarbeitungsverfahren mit den Merkmalen des Anspruchs 12 bereit. Vorteilhafte Ausführungsformen der Erfindung sind in den Unteransprüchen genannt.

Dadurch, dass die Qualität des in die Behälter abgefüllten Getränks mit wenigstens einer Gasanalyseeinrichtung gesichert wird, und dass mit einer Gasansaugeinrichtung der wenigstens einen Gasanalyseeinrichtung jeweils Gas aus einem Kopfbereich der mit dem Getränk befüllten Behälter angesaugt und mit einem Analysator analysiert wird, ist es möglich, das aus dem Kopfbereich der Behälter angesaugte Gas hinsichtlich seiner Zusammensetzung zu analysieren. Der Erfinder hat in umfangreichen Untersuchungen festgestellt, dass dann aus der analysierten Zusammensetzung des angesaugten Gases auch auf die Qualität des in den jeweiligen Behälter abgefüllten Getränks geschlossen werden kann. Folglich ist es also möglich, mittels der Gasanalyseeinrichtung eine zuverlässige und schnelle Qualitätssicherung des in die Behälter abgefüllten Getränks durchzuführen.

Unter "Qualitätssicherung" kann hier verstanden werden, dass die Zusammensetzung des Getränkes labortechnisch bis auf das einzelne Misch- bzw. Abfüllventil der Füllmaschine erfasst wird, insbesondere das tatsächliche Mischungsverhältnis.

Denkbar ist, dass das Getränk in Mischeinrichtungen der Füllventile aus den wenigstens zwei Komponenten gemischt wird.

Bevorzugt umfasst das Getränkeverarbeitungsverfahren einen geschlossenen Regelkreislauf aus der Analyse des Gases und der Mischung des Getränks durch die Mischeinrichtung. Es kann beispielsweise während des Betriebs festgestellt werden, dass das Mischungsverhältnis justagebedürftig ist, wobei dann die Mischung derart angepasst wird, dass wieder vorbestimmte Zielwerte für die Mischung erreicht werden.

Denkbar ist, dass aufgrund der Analyse bestimmte Gasanalysedaten an eine nachfolgende Druckeinrichtung zur Bedruckung der befüllten Behälter zur Verfügung gestellt werden. Damit wird eine individuelle Kennzeichnung des Behälterinhalts des tatsächlich abgefüllten Getränks erreicht.

Die Analyse beschränkt sich hierbei nicht auf das Getränk, sondern kann auch eine Zuordnung von Analysedaten zu einem Füllventil bedeuten. Damit wird vorteilhafterweise Redundanz erreicht, da beispielsweise die Füllmaschine von einer übergeordneten Steuerung den Befehl erhält, mit einem ersten Ventil ein drittes Getränk zu produzieren. Mithilfe des Getränkeverarbeitungsverfahrens ist es möglich, die korrekte Durchführung des Befehls zu kontrollieren.

In vorteilhafter Weise eignet sich die Analyse als Baustein für ein ERP- System. Es kann damit ermittelt werden, dass z.B. ein individualisiertes Getränk erfolgreich in den z.B. individualisierten Behälter abgefüllt worden ist und sich bereits auf dem Weg zum Verpackungszentrum/ Kunden befindet.

Das Getränkeverarbeitungsverfahren kann mit der zuvor beschriebenen Getränkeverarbeitungsanlage, insbesondere nach einem der Ansprüche 1 - 11 durchgeführt werden. Insbesondere kann das Getränkeverarbeitungsverfahren zuvor in Bezug auf die Getränkeverarbeitungsanlage beschriebene Merkmale einzelnen oder in beliebigen Kombinationen sinngemäß umfassen.

Denkbar ist, dass mit einer Düse der Gasanalyseeinrichtung ein Verdrängungsgas in den Kopfbereich der mit dem Getränk befüllten Behälter eingeblasen und dadurch ein im Kopfbereich vorhandener, gasförmigen Anteil des Getränks zur Gasansaugeinrichtung hin verdrängt wird. Dadurch kann eine besonders große Menge des Gases aus den Kopfbereich angesaugt werden, wodurch die Analyse des angesaugten Gases noch zuverlässiger arbeitet.

Weitere Merkmale und Vorteile der Erfindung werden nachfolgend anhand der in den Figuren dargestellten Ausführungsbeispiele näher erläutert. Dabei zeigt:
- Figur 1: ein erfindungsgemäßes Ausführungsbeispiel einer Getränkeverarbeitungsanlage in einer schematischen Draufsicht;
- Figur 2: eine seitliche Detailansicht des Transporteurs und der Gasanalyseeinrichtung sowie eine schematische Ansicht der Steuerungseinrichtung aus der Figur 1; und
- Figur 3: ein alternatives, erfindungsgemäßes Ausführungsbeispiel einer Getränkeverarbeitungsanlage mit einer Detailansicht eines Füllers.

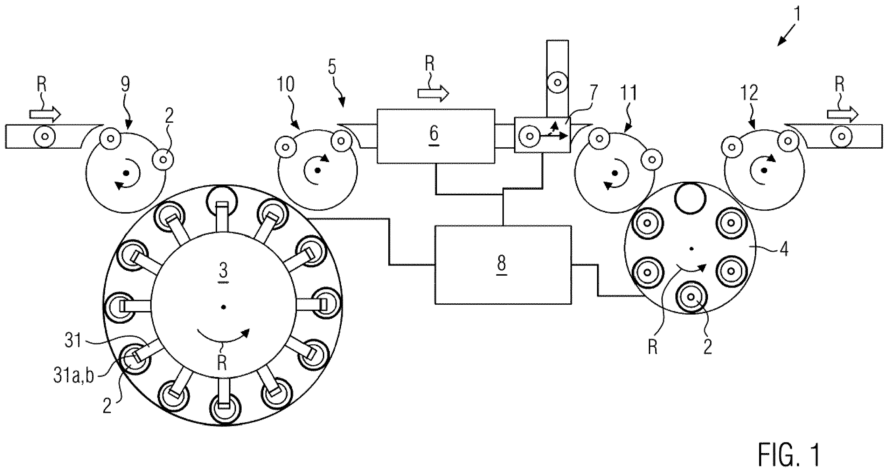

In der Figur 1 ist ein erfindungsgemäßes Ausführungsbeispiel einer Getränkeverarbeitungsanlage 1 in einer schematischen Draufsicht dargestellt. Zu sehen ist, dass die Getränkeverarbeitungsanlage 1 den Füller 3 mit mehreren Füllventilen 31 zum Mischen und Abfüllen eines Getränks in die Behälter 2 und den Verschließer 4 zum Verschließen der befüllten Behälter 2 umfasst. Darüber hinaus ist der Transporteur 5 zu sehen, um die Behälter 2 vom Füller 3 zum Verschließer 4 zu transportieren, wobei daran die Gasanalyseeinrichtung 6 angeordnet ist. Bei einer zu geringen Qualität des in die Behälter abgefüllten, gemischten Getränks können die Behälter 2 mit der Weiche 7 gegebenenfalls ausgeschleust werden. Zu sehen ist auch die Steuerungseinrichtung 8, die hier beispielsweise als Maschinensteuerung ausgebildet ist und die zur Steuerung mit dem Füller 3, der Gasanalyseeinrichtung 6, der Weiche 7 und dem Verschließer 4 verbunden ist.

Zu sehen ist auch, dass der Füller 3 als umlaufendes Karussell ausgebildet ist, mit dem die Behälter 2 in Förderrichtung R transportiert werden. Entsprechend sind die Füllventile 31 korrespondierend mit hier lediglich schematisch angedeuteten Behälteraufnahmen am Füller 3 angeordnet, so dass die Behälter 2 vom Einlaufstern 9 kommend in die Behälteraufnahmen aufgenommen werden, und dort während des Transports von den Füllventilen 31 befüllt werden.

Die Füllventile 31 sind jeweils mit einer Mischeinrichtung 31a zum Mischen des Getränks aus wenigstens zwei Komponenten und mit einer Abfülleinrichtung 31b zum Abfüllen des gemischten Getränks in die Behälter ausgebildet. Dadurch können wenigstens zwei Komponenten eines Getränks dem Füller 3 zugeführt und erst in den Füllventilen 31 mit den Mischeinrichtungen 31a gemischt werden. Dadurch ist eine flexiblere Mischung des abzufüllenden Getränks möglich. Beispielsweise handelt es sich bei den wenigstens zwei Komponenten um ein Hauptstrom mit Wasser, das pur oder nur teilweise mit Fertigsirup versetzt ist und um einen Dosierstrom mit Fertigsirup. Dadurch kann das Getränk im Füller 3 fein und flexibel dosiert werden.

Der Verschließer 4 umfasst hier ebenfalls ein Karussell, an dem umlaufend Behälteraufnahmen angeordnet sind, um die Behälter 2 während des Verschließvorgangs in der Transportrichtung R zu transportieren. Zudem umfasst der Verschließer 4 korrespondierend mit den Behälteraufnahmen angeordnete Verschließköpfe, um die Behälter 2 beispielsweise mit Kronkorken, Schraubverschlüssen und/oder mit Korken zu versehen.

Um nun eine ausreichende Qualität des im Füller 3 gemischten und abgefüllten Getränks sicherzustellen, ist die Gasanalyseeinrichtung 6 an dem Transporteur 5 zwischen dem Füller 3 und dem Verschließer 4 angeordnet. Sie wird nachfolgend beschrieben:

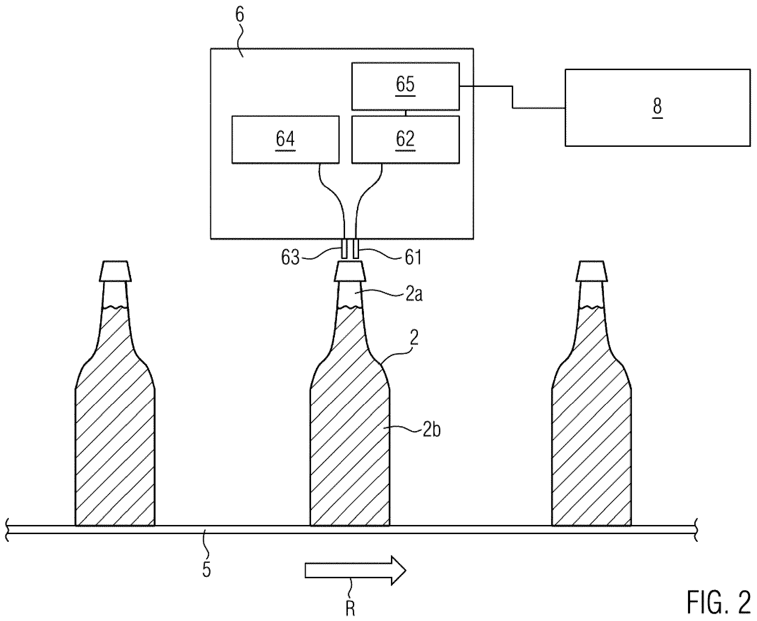

in der Figur 2 ist eine seitliche Ansicht des Transporteurs 5 und der Gasanalyseeinrichtung 6 sowie eine schematische Ansicht der Steuerungseinrichtung 8 aus der Figur 1 dargestellt.

Zu sehen ist, dass die mit dem Getränk 2b befüllten Behälter 2 auf dem Transporteur 5 stehend in der Förderrichtung R transportiert werden und dabei an der Gasanalyseeinrichtung 6 vorbeigeführt werden.

Die Gasanalyseeinrichtung 6 umfasst die Gasansaugeinrichtung 61 zum Ansaugen von Gas aus dem Kopfbereich 2a der mit dem Getränk 2b befüllten Behälter 2 und einen Analysator 62 zur Analyse des angesaugten Gases. Der Analysator 62 ist hier beispielsweise als Massenspektrometer ausgebildet, denkbar ist jedoch auch ein Gaschromatograph, ein Ionenmobilitätsspektrometer oder eine beliebige Kombination derartiger Analysevorrichtungen. Dadurch kann die chemische Zusammensetzung der chemischen Verbindungen und/oder chemischen Elemente im Gas bestimmt werden.

Des Weiteren ist zu sehen, dass die Gasanalyseeinrichtung 6 die Düse 63 zum Einblasen eines Verdrängungsgases in den Kopfbereich 2a der mit dem Getränk befüllten Behälter 2 umfasst. Durch das Einblasen des Verdrängungsgases wird der im Kopfbereich 2a vorhandene, gasförmige Anteil des Getränks 2b zur Gasansaugeinrichtung 61 hin verdrängt. Die Düse 63 wird mit einer Drucklufteinheit 64 mit gereinigter Druckluft oder mit Stickstoff versorgt. Zu sehen ist auch, dass die Düse 63 und die Gasansaugeinrichtung 61 in Förderrichtung R hintereinander angeordnet sind, wodurch das Einblasen schon beginnen kann, bevor die Gasansaugeinrichtung 61 das Gas aus dem Kopfbereich 2a angesaugt. Dadurch wird vermieden, dass Umgebungsluft zum Analysator 62 hin eingesaugt wird.

Des Weiteren ist zu sehen, dass die Gasansaugeinrichtung 61 ein Gasansaugrohr umfasst, das über eine Schlauchverbindung mit dem Analysator 62 verbunden ist. Dadurch wird das Gas aus dem Kopfbereich 2a zum Analysator 62 geleitet.

Des Weiteren umfasst die Gasanalyseeinrichtung 6 die Auswerteeinheit 65, mit der die genaue Zusammensetzung des Gases aus dem Kopfbereich 2a der befüllten Behälter 2 bestimmt wird. In der Auswerteeinheit sind beispielsweise Messkurven hinterlegt, mit der aus der Zusammensetzung des Gases auf die Zusammensetzung des Getränks 2b geschlossen werden kann. Beispielsweise kann dann mit der Auswerteeinheit 65 aufgrund von Qualitätskriterien (beispielsweise mit Schwellwerten) eine Entscheidung erfolgen, ob das abgefüllte und gemischte Getränk in dem jeweiligen Behälter 2 eine ausreichende Qualität aufweist. Ist dies der Fall, so wird der entsprechende Behälter 2 zum nachfolgenden Verschließer 4 weitertransportiert. Andernfalls wird er mit der Weiche 7 ausgeschleust und beispielsweise einer Wiederverwertung zugeführt.

Zu sehen ist auch, dass die Auswerteeinheit 65 mit der Steuerungseinrichtung 8 verbunden ist. Dadurch kann die Steuerungseinrichtung 8 eine entsprechende Aktion der Weiche 7 einleiten. Die Auswerteeinheit 65 und/oder die Steuerungseinrichtung 8 sind auch dazu ausgebildet, die Qualität des abgefüllten und gemischten Getränks 2b in den Behältern 2 den jeweiligen Füllventilen 31 zuordnen und/oder statistische Daten über die Qualität sammeln. Über die Zuordnung der Qualität zu den Füllventilen 31 wäre es beispielsweise möglich, aufgrund einer häufiger bei einem bestimmten Füllventil 31 auftretenden Qualitätsminderung auf dessen Fehlfunktion zu schließen.

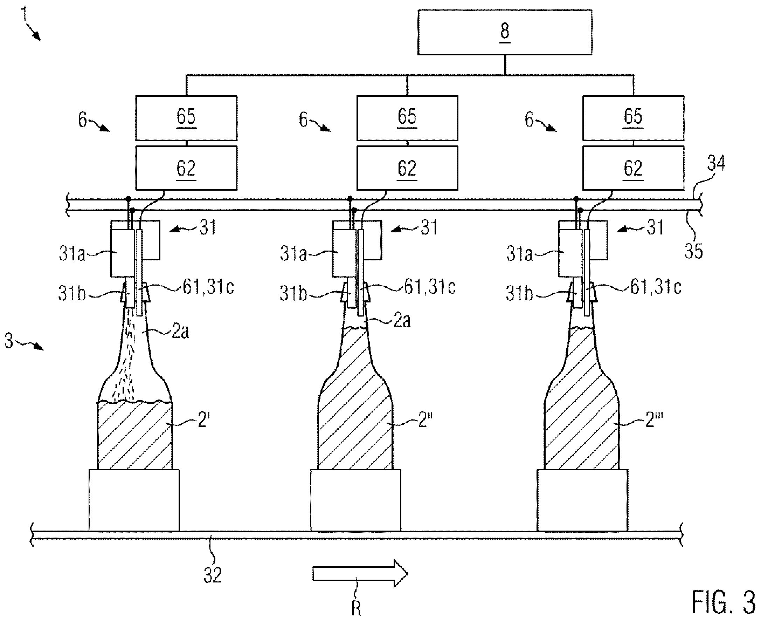

In der Figur 3 ist ein alternatives, erfindungsgemäßes Ausführungsbeispiel einer Getränkeverarbeitungsanlage 1 mit einer Detailansicht eines Füllers 3 dargestellt. Das Ausführungsbeispiel in der Figur 3 unterscheidet sich von dem in der Figur 1 und 2 lediglich dadurch, dass die Gasanalyseeinrichtung 6 nicht am Transporteur 5 zwischen dem Füller 3 und dem Verschließer 4 angeordnet ist, sondern, dass mehrere der Gasanalyseeinrichtungen 6 vorhanden sind, die jeweils einem der Füllventile 31 im Füller 3 zugeordnet sind. Dadurch ist es möglich, die Qualität des Getränks direkt beim Abfüllen zu bestimmen und so eine Fehlfunktion früher zu erkennen.

Zu sehen ist, dass jedes der Füllventile 31 eine Mischeinrichtung 31a und eine Abfülleinrichtung 31b umfasst. Bei der Mischeinrichtung 31a handelt es sich beispielsweise um einen Füllkörper, mit dem, wie zuvor in Bezug auf die Figur 1 beschrieben, wenigstens zwei Komponenten des Getränks gemischt werden können, beispielsweise mittels eines Hauptstroms aus der ersten Leitung 34 und mittels eines Dosierstroms aus der zweiten Leitung 35. Bei der Abfülleinrichtung 31b handelt es sich beispielsweise um eine Fülldüse, die eine sichere Verbindung zur Mündung der Behälter 2', 2", 2‴ beim Abfüllen herstellt.

Darüber hinaus ist zu sehen, dass die Füllventile 31 jeweils ein Rückgasrohr 31c umfassen, durch das beim Füllen in den Behältern 2 vorhandenes Gas entweichen kann. Zudem bildet das Rückgasrohr 31c einen Teil der Gasansaugeinrichtung 61 und ist über einen Schlauch mit dem zugeordneten Analysator 62 verbunden. Die Analysatoren 62 sind hier ebenfalls jeweils als Massenspektrometer oder Gaschromatograph ausgebildet.

Wie in der Figur 3 dargestellt, wird gerade der Behälter 2' befüllt und das entsprechende Füllventil 31 ist aktiv. Dabei wird das Gas im Kopfbereich 2a zum Rückgasrohr 31c hin verdrängt und durch die Gasansaugeinrichtung 61 zum Analysator 62 hin verdrängt. Dies geschieht so lange, bis der Füllvorgang abgeschlossen ist, wie dies beispielsweise beim Behälter 2" der Fall ist. Folglich muss also das Gas im Kopfbereich 2a der Behälter 2', 2" nicht durch eine Pumpe oder dergleichen zum Analysator 62 hin angesaugt werden.

Beim Behälter 2‴ ist der Ansaugvorgang abgeschlossen und das Gas kann mit dem Analysator 62 hinsichtlich seiner chemischen Zusammensetzung, wie zuvor beschrieben, analysiert werden. Anschließend kann daraus mittels der Auswerteeinheit 65 auf die Qualität des gemischten und abgefüllten Getränks geschlossen werden. Entsprechend wird dann von der Auswerteeinheit 65 an die Steuerungseinrichtung 8 ein Signal abgegeben, ob das in den Behälter 2‴ abgefüllte Getränk eine ausreichende Qualität aufweist.

Die Getränkeverarbeitungsanlagen 1 in den Figuren 1-3 werden wie folgt eingesetzt:
Mit mehreren Füllventilen 31 des Füllers 3 wird das Getränk gemischt und in die Behälter 2 abgefüllt, wobei das Getränk in den Mischeinrichtungen 31a der Füllventile 31 aus wenigstens zwei Komponenten gemischt und mit den Abfülleinrichtungen 31b der Füllventile 31 in die Behälter 2 abgefüllt wird.

Die Qualität des in die Behälter 2 abgefüllten und gemischten Getränks wird mit einer Gasanalyseeinrichtungen 6 (Figuren 1 - 2) oder mit mehreren Gasanalyseeinrichtungen (Figur 3) gesichert, wobei entsprechend mit einer oder mehreren Gasansaugeinrichtungen 61 jeweils Gas aus einem Kopfbereich 2a der mit dem Getränk befüllten Behälter 2 angesaugt und mit dem zugehörigen Analysator 62 analysiert wird.

Wie in den Figuren 1-2 zu sehen, werden die Behälter 2 nach dem Füller 3 zunächst zur Gasanalyseeinrichtung 6 und dann über die Weiche 7 zum nachfolgenden Verschließer 4 transportiert und dort verschlossen. Die Qualitätssicherung erfolgt also zwischen dem Füller 3 und im Verschließer 4, wobei Behälter mit einer nicht ausreichenden Qualität über die Weiche 7 ausgeschleust werden. Um eine möglichst genaue Qualitätssicherung zu gewährleisten, wird dabei mit der Düse 63 ein Verdrängungsgas in den Kopfbereich 2a in die mit dem Getränk befüllten Behälter 2 eingeblasen und dadurch zur Gasansaugeinrichtung 61 hin verdrängt.

Demgegenüber erfolgt die Qualitätssicherung bei dem Ausführungsbeispiel nach der Figur 3 direkt beim Füllen, wobei das Gas aus dem Kopfbereich der Behälter 2', 2", 2‴ durch das Getränk selbst verdrängt und über das Rückgasrohr 31c zum Analysator 62 hin angesaugt wird.

Bei den Ausführungsbeispielen der Figuren 1-3 ist es also möglich, dass Gas aus dem Kopfbereich 2a der Behälter 2 zu analysieren und auf die Zusammensetzung des in den Füllventilen 31 gemischten Getränks zu schließen. Dadurch ist eine besonders zuverlässige und genaue Qualitätssicherung möglich.

## Patentansprüche

1. Getränkeverarbeitungsanlage (1) zum Abfüllen eines Getränks in Behälter (2), mit einem Füller (3) mit mehreren Füllventilen (31) zum Abfüllen des Getränks in die Behälter, wobei die Füllventile (31) jeweils mit einer Abfülleinrichtung (31b) zum Abfüllen von wenigstens zwei Komponenten des Getränks in einen der Behälter (2) ausgebildet sind, einem Verschließer (4) zum Verschließen der mit dem Getränk befüllten Behälter (2), und mit einem Transporteur (5), um die Behälter (2) wenigstens vom Füller (3) zum Verschließer (4) zu transportieren,
**dadurch gekennzeichnet, dass**
die Getränkeverarbeitungsanlage (1) wenigstens eine Gasanalyseeinrichtung (6) zur Qualitätssicherung des in die Behälter (2) abgefüllten, gemischten Getränks umfasst, und
dass die wenigstens eine Gasanalyseeinrichtung (6) jeweils eine Gasansaugeinrichtung (61) zum Ansaugen von Gas aus einem Kopfbereich (2a) der mit dem Getränk befüllten Behälter (2) und einen Analysator (62) zur Analyse des angesaugten Gases umfasst, so dass aus der analysierten Zusammensetzung des angesaugten Gases auf die Qualität des in den jeweiligen Behälter abgefüllten Getränks geschlossen werden kann.

2. Getränkeverarbeitungsanalage (1) nach Anspruch 1, wobei der Analysator (62) einen Gaschromatographen, ein lonenmobilitätsspektrometer und/oder ein Massenspektrometer umfasst.

3. Getränkeverarbeitungsanlage (1) nach Anspruch 1 oder 2, wobei die Gasanalyseeinrichtung (6) eine Düse (63) zum Einblasen eines Verdrängungsgases in den Kopfbereich (2a) der mit dem Getränk befüllten Behälter (2) umfasst, um durch das Verdrängungsgas einen im Kopfbereich (2a) vorhandenen, gasförmigen Anteil des Getränks zur Gasansaugeinrichtung (61) hin zu verdrängen.

4. Getränkeverarbeitungsanlage (1) nach Anspruch 3, wobei die Düse (63) und die Gasansaugeinrichtung (61) in einer Förderrichtung (R) hintereinander angeordnet sind.

5. Getränkeverarbeitungsanlage (1) nach einem der vorangegangenen Ansprüche, wobei die Gasansaugeinrichtung (61) ein Gasansaugrohr umfasst, das insbesondere über eine Schlauch- oder Rohrverbindung mit dem Analysator (62) verbunden ist.

6. Getränkeverarbeitungsanlage (1) nach einem der vorangegangenen Ansprüche, wobei die Gasanalyseeinrichtung (6) zwischen dem Füller (3) und dem Verschließer (4) am Transporteur (5) angeordnet ist.

7. Getränkeverarbeitungsanlage (1) nach einem der Ansprüche 1 - 5, wobei mehrere der Gasanalyseeinrichtungen (6) vorhanden sind, die jeweils einem der Füllventile (31) zugeordnet sind.

8. Getränkeverarbeitungsanlage (1) nach Anspruch 7, wobei die Füllventile (31) jeweils ein Rückgasrohr (31c) umfassen, das wenigstens einen Teil der Gasansaugeinrichtung (61) bildet.

9. Getränkeverarbeitungsanlage (1) nach einem der vorangegangenen Ansprüche, wobei die wenigstens eine Gasanalyseeinrichtung (6) weiter jeweils eine Auswerteeinheit (65) umfasst, um die Analyse des angesaugten Gases auszuwerten.

10. Getränkeverarbeitungsanlage (1) nach Anspruch 9, wobei die Auswerteeinheit (65) dazu ausgebildet ist, um von der Analyse des angesaugten Gases auf Mischverhältnisse des abgefüllten Getränks zu schließen.

11. Getränkeverarbeitungsanlage (1) nach einem der vorangegangenen Ansprüche, wobei die Füllventile (31) jeweils mit einer Mischeinrichtung (31a) zum Mischen des Getränks aus den wenigstens zwei Komponenten ausgebildet sind.

12. Getränkeverarbeitungsverfahren zum Abfüllen eines Getränks in Behälter (2), wobei mit mehreren Füllventilen (31) eines Füllers (3) das Getränk in die Behälter (2) abgefüllt wird, wobei wenigstens zwei Komponenten des Getränks mit Abfülleinrichtungen (31b) der Füllventile (31) in die Behälter (2) abgefüllt werden,
wobei die mit dem Getränk befüllten Behälter (2) mit einem Verschließer (4) verschlossen werden, und
wobei die Behälter (2) vom Füller (3) zum Verschließer (4) mit einem Transporteur (5) transportiert werden,
**dadurch gekennzeichnet, dass**
die Qualität des in die Behälter (2) abgefüllten und gemischten Getränks mit wenigstens einer Gasanalyseeinrichtung (6) gesichert wird, und
dass mit einer Gasansaugeinrichtung (61) der wenigstens einen Gasanalyseeinrichtung (6) jeweils Gas aus einem Kopfbereich (2a) der mit dem Getränk befüllten Behälter (2) angesaugt und mit einem Analysator (62) analysiert wird, so dass aus der analysierten Zusammensetzung des angesaugten Gases auf die Qualität des in den jeweiligen Behälter abgefüllten Getränks geschlossen werden kann.

13. Gasanalyseverfahren nach Anspruch 12, wobei mit einer Düse (63) der Gasanalyseeinrichtung (6) ein Verdrängungsgas in den Kopfbereich (2a) der mit dem Getränk befüllten Behälter (2) eingeblasen wird und dadurch ein im Kopfbereich (2a) vorhandener, gasförmigen Anteil des Getränks zur Gasansaugeinrichtung (61) hin verdrängt wird.

14. Gasanalyseverfahren nach Anspruch 12 oder 13, wobei das Getränk in Mischeinrichtungen (31a) der Füllventile (31) aus den wenigstens zwei Komponenten gemischt wird.

## Claims

1. Beverage processing system (1) for filling a beverage into containers (2) with
a filler (3) with several filling valves (31) for filling said beverage into said containers, where said filling valves (31) are each configured having a filling device (31b) for filling at least two components of said beverage into one of said containers (2),
a capper (4) for closing said containers (2) filled with said beverage,
and with a conveyor (5) for transporting said containers (2) at least from said filler (3) to said capper (4),
**characterized in that**
said beverage processing system (1) comprises at least one gas analysis device (6) for quality control of said mixed beverage filled into said containers (2), and
**in that** said at least one gas analysis device (6) each comprises a gas suctioning device (61) for suctioning gas from a head region (2a) of said containers (2) filled with said beverage and an analyzer (62) for analyzing said suctioned gas, so that based on the analyzed composition of the suctioned gas conclusions about the quality of the beverage filled into the respective container can be drawn.

2. Beverage processing system (1) according to claim 1, where said analyzer (62) comprises a gas chromatograph, an ion mobility spectrometer, and/or a mass spectrometer.

3. Beverage processing system (1) according to claim 1 or 2, where said gas analysis device (6) comprises a nozzle (63) for blowing displacement gas into said head region (2a) of said containers (2) filled with said beverage in order to displace a gaseous component of said beverage present in said head region (2a) towards said gas suctioning device (61) using said displacement gas.

4. Beverage processing system (1) according to claim 3, where said nozzle (63) and said gas suctioning device (61) are arranged consecutively in a conveying direction (R).

5. Beverage processing system (1) according to one of the preceding claims, where said gas suctioning device (61) comprises a gas suctioning pipe which is connected to said analyzer (62) in particular by way of a hose or pipe connection.

6. Beverage processing system (1) according to one of the preceding claims, where said gas analysis device (6) is arranged between said filler (3) and said capper (4) at said conveyor (5).

7. Beverage processing system (1) according to one of the claims 1-5, where several of said gas analysis devices (6) are present and are each associated with one of said filling valves (31).

8. Beverage processing system (1) according to claim 7, where said filling valves (31) each comprise a return gas pipe (31c) which forms at least part of said gas suctioning device (61).

9. Beverage processing system (1) according to one of the preceding claims, where said at least one gas analysis device (6) each further comprises an evaluation unit (65) for evaluating the analysis of said suctioned gas.

10. Beverage processing system (1) according to claim 9, where said evaluation unit (65) is configured to draw conclusions from the analysis of said suctioned gas about the mixing ratios of said beverage filled.

11. Beverage processing system (1) according to one of the preceding claims, where said filling valves (31) are each formed with a mixing device (31a) for mixing said beverage from the at least two components.

12. Beverage processing method for filling a beverage into containers (2), where said beverage is filled into said containers (2) using several filling valves (31) of a filler (3), where at least two components of said beverage are filled into said containers (2) using filling devices (31b) of said filling valves (31),
where said containers (2) filled with said beverage are closed using a capper (4), and
where said containers (2) are transported from said filler (3) to said capper (4) using a conveyor (5),
**characterized in that,**
the quality of said beverage mixed and filled into said containers (2) is ensured using at least one gas analysis device (6), and
that gas is suctioned from a head region (2a) of said containers (2) filled with said beverage using a gas suctioning device (61) of said at least one gas analysis device (6) and analyzed using an analyzer (62), so that based on the analyzed composition of the suctioned gas conclusions about the quality of the beverage filled into the respective container can be drawn.

13. Gas analysis method according to claim 12, where a nozzle (63) of said gas analysis device (6) is used to blow displacement gas into said head region (2a) of said containers (2) filled with said beverage, thereby displacing a gaseous portion of said beverage present in said head region (2a) towards said gas suctioning device (61).

14. Gas analysis method according to claim 12 or 13, where said beverage is mixed from the at least two components in mixing devices (31a) of said filling valves (31).

## Revendications

1. Installation de traitement de boissons (1) pour verser une boisson dans des contenants (2), comprenant un dispositif de remplissage (3) avec plusieurs vannes de remplissage (31) pour verser la boisson dans les contenants, dans laquelle les vannes de remplissage (31) sont formées respectivement avec un dispositif de versement (31b) pour verser au moins deux composants de la boisson dans l'un des contenants (2), un dispositif de fermeture (4) pour fermer les contenants (2) remplis de la boisson, et un dispositif de transport (5) pour transporter les contenants (2) au moins du dispositif de remplissage (3) vers le dispositif de fermeture (4),
**caractérisée en ce que**
l'installation de traitement de boissons (1) comprend au moins un dispositif d'analyse de gaz (6) pour garantir la qualité de la boisson mélangée versée dans les contenants (2), et
**en ce que** le au moins un dispositif d'analyse de gaz (6) comprend respectivement un dispositif d'aspiration de gaz (61) pour aspirer un gaz à partir d'une zone de tête (2a) des contenants remplis de la boisson (2) et un analyseur (62) pour analyser le gaz aspiré, de sorte que la qualité de la boisson versée dans le contenant respectif peut être déduite de la composition analysée du gaz aspiré.

2. Installation de traitement de boissons (1) selon la revendication 1, dans laquelle l'analyseur (62) comprend un chromatographe en phase gazeuse, un spectromètre à mobilité ionique et/ou un spectromètre de masse.

3. Installation de traitement de boissons (1) selon la revendication 1 ou 2, dans laquelle le dispositif d'analyse de gaz (6) comprend une buse (63) pour injecter un gaz de refoulement dans la zone de tête (2a) des contenants (2) remplis avec la boisson afin de refouler, par l'intermédiaire du gaz de refoulement, une partie gazeuse de la boisson présente dans la zone de tête (2a) vers ledit dispositif d'aspiration de gaz (61).

4. Installation de traitement de boissons (1) selon la revendication 3, dans laquelle la buse (63) et le dispositif d'aspiration de gaz (61) sont agencés l'un derrière l'autre dans une direction de transport (R).

5. Installation de traitement de boissons (1) selon l'une quelconque des revendications précédentes, dans laquelle le dispositif d'aspiration de gaz (61) comprend un tube d'aspiration de gaz, qui est raccordé à l'analyseur (62), en particulier par l'intermédiaire d'un raccord de tuyau ou de tube.

6. Installation de traitement de boissons (1) selon l'une quelconque des revendications précédentes, dans laquelle le dispositif d'analyse de gaz (6) est agencé au niveau du transporteur (5) entre le dispositif de remplissage (3) et le dispositif de fermeture (4).

7. Installation de traitement de boissons (1) selon l'une quelconque des revendications 1 à 5, dans laquelle plusieurs des dispositifs d'analyse de gaz (6) sont présents, qui sont chacun associés à l'une des vannes de remplissage (31).

8. Installation de traitement de boissons (1) selon la revendication 7, dans laquelle les vannes de remplissage (31) comprennent chacune un tube de retour de gaz (31c) qui forme au moins une partie du dispositif d'aspiration de gaz (61).

9. Installation de traitement de boissons (1) selon l'une quelconque des revendications précédentes, dans laquelle le au moins un dispositif d'analyse de gaz (6) comprend en outre respectivement une unité d'évaluation (65) pour évaluer l'analyse du gaz aspiré.

10. Installation de traitement de boissons (1) selon la revendication 9, dans laquelle l'unité d'évaluation (65) est formée pour déduire des rapports de mélange de la boisson versée à partir de l'analyse du gaz aspiré.

11. Installation de traitement de boissons (1) selon l'une quelconque des revendications précédentes, dans laquelle les vannes de remplissage (31) sont chacune formées avec un dispositif de mélange (31a) pour mélanger la boisson à partir des au moins deux composants.

12. Procédé de traitement de boissons pour verser une boisson dans des contenants (2), dans lequel la boisson est versée dans les contenants (2) avec plusieurs vannes de remplissage (31) d'un dispositif de remplissage (3), dans lequel au moins deux composants de la boisson sont versés dans les contenants (2) avec des dispositifs de versement (31b) des vannes de remplissage (31),
dans lequel les contenants (2) remplis de la boisson sont fermés avec un dispositif de fermeture (4), et
dans lequel les contenants (2) sont transportés du dispositif de remplissage (3) vers le dispositif de fermeture (4) avec un dispositif de transport (5),
**caractérisé en ce que**
la qualité de la boisson versée et mélangée dans les contenants (2) est assurée au moyen d'au moins un dispositif d'analyse de gaz (6), et
**en ce qu'**un dispositif d'aspiration de gaz (61) du au moins un dispositif d'analyse de gaz (6) aspire respectivement un gaz à partir d'une zone de tête (2a) du contenant (2) rempli de boisson et est analysé avec un analyseur (62), de sorte que la qualité de la boisson versée dans le contenant respectif peut être déduite de la composition analysée du gaz aspiré.

13. Procédé d'analyse de gaz selon la revendication 12, dans lequel un gaz de refoulement est injecté dans la zone de tête (2a) des contenants (2) remplis de la boisson au moyen d'une buse (63) du dispositif d'analyse de gaz (6) et une partie gazeuse de la boisson présente dans la zone de tête (2a) est ainsi refoulée vers le dispositif d'aspiration de gaz (61).

14. Procédé d'analyse de gaz selon la revendication 12 ou 13, dans lequel la boisson est mélangée dans des dispositifs de mélange (31a) des vannes de remplissage (31) à partir des au moins deux composants.
